# EUROPEAN PATENT APPLICATION

(11) **EP 2 511 251 A1**
(43) Date of publication of application: **17.10.2012**
(21) Application number: 09805854.8
(22) Date of filing: 10.12.2009
(51) Int. Cl.: C04B 35/622, C22B 1/14, C22B 1/16, C22B 1/24, C04B 33/135

(54) **CERAMICS PRODUCED FROM SOLID WASTE INCINERATION BOTTOM ASH**

(30) Priority: 07.12.2009 PT 09104861
(71) Applicant: Universidade de Aveiro, 3810-193 Aveiro (PT); FACULDADE DE CIÊNCIAS E TECNOLOGIA/ UNIVERSIDADE NOVA DE LISBOA, 2829-516 Caparica (PT)
(72) Inventor: FIGUEIRA VAZ FERNANDES, Maria Helena, P-3800-110 Aveiro (PT); CORREDEIRA MONTEIRO, Regina da Conceição, P-1600-203 Lisboa (PT); CARDOSO RODRIGUES DAVIM, Erika Judith, P-3810-193 Aveiro (PT); MADALENO LOUREIRO DE FIGUEIREDO, Carlos Frederico, P-2825-444 Costa da Caparica (PT); GONÇALVES LOPES, Marco, P-9225-250 Machico (PT)
(74) Representative: Ferreira, Maria Silvina
(86) International application number: PCT/IB2009/055671
(87) International publication number: WO 2011/070399

(57) **Abstract**

The present invention refers to the production of ceramic materials by using (25-100%) of bottom ash obtained from the incineration of Solid Wastes (SW), preferably from Municipal Solid Wastes (MSW), having application in construction industry and/or as utilitarian ceramics.

While in the manufacture of conventional ceramics for the same applications, clay minerals, quartz and feldspar are the base raw materials generally used, with specific processing functions, in this case, an innovation is that raw materials can be constituted by bottom ash from SW incineration, preferably fully consisting of MSW bottom ash, without the necessity of using any other additive

## Description

### Technical domain

The present invention refers top the production of ceramic materials for application in construction industry, namely as pavement and cladding tiles, brick and roof tiles or as utilitarian and decorative ceramic, by using 25 to 100% of bottom ash resulting from the incineration of Solid Wastes (SW) or Municipal Solid Wastes (MSW). While in the manufacture of conventional ceramics for the same applications, clay minerals, sand, dolomite and feldspars, with specific roles during processing, are traditionally used as raw materials, together with additives that, after spray drying are formed by pressing, in the present case, an innovation is the fact that the raw materials may include at least 25 % of bottom ash resulting from SW incineration, or preferably containing 100 % of bottom ash resulting from MSW incineration, with or without any other additive.

The manufacturing process of these ceramics involves the preparation of the bottom ashes resulting from MSW incineration, the crushing and grinding of the bottom ash, the compacting of the powder mixture by a dry or wet method, such as pressing and the firing of the compacts at a controlled temperature in order to obtain a dense ceramic, with suitable mechanical strength for its potential applications.

By maintaining the preparation conditions properly controlled, aesthetically attractive ceramics are obtained, with physical and mechanical properties similar to those of conventional ceramics.

Besides the technological innovation per se, the described solution represents environmental advantages, not only because it is associated to the valorization and recycling of a waste material, which very often is disposed into landfills, but also because it contributes in preservation of natural resources of the minerals that are routinely used as raw materials for traditional ceramics.

The invention herein presented has as singularity the fact of using in the production of ceramics a raw material preferably constituted by bottom ashes resulting from the incineration of MSW, with the possibility of adding, or not, up to a maximum of 75% of any other raw materials, for example additives, coloring or fluxing agents. The produced materials have a great applicability in the ceramic industry. They present a water absorption value between 0.5-18%, depending on the amount and nature of the raw materials added to the incineration bottom ashes and a mechanical strength higher than 20 MPa. Taking into account the state of the art concerning the utilization of bottom ashes resulting from the incineration of MSW in the production of ceramics, it is verified that these residues have always been used combined with other materials, that can be other types of solid wastes, or can be natural minerals. The originality of the present processing methodology is the fact that, from solid wastes preferably constituted exclusively by bottom ashes resulting from the incineration of MSW, and by selection of powder fractions of ground bottom ashes with specific particle sizes, followed by compacting and sintering of the bottom ash particles, it is possible to achieve the production of ceramics with adequate characteristics to the envisaged applications. It should be pointed out that, from an economical point of view, the raw material used in such manufacturing process is less expensive than the silicate natural minerals traditionally used in the production of ceramics.

### State of the art

Typically, the production of ceramic materials involves the firing of mixtures of specific raw materials such as silica, clay minerals, feldspar and other additives that provide the characteristic values of density and mechanical strength required by the envisaged applications. However, the growing scarceness of the natural resources of such minerals implies that alternative and adequate raw materials with low cost must be found, and therefore, contributing to reduce significantly the final cost of the ceramic products.

The bottom ashes, recovered from the combustion chamber of a municipal solid wastes incinerator, are essentially constituted by mineral residues of a rather complex composition. They have silica as major component 50-60% (w/w), but they have also appreciable amounts of other oxides, frequently present in the minerals existing in the raw materials for traditional ceramics, such as aluminum oxide, calcium oxide and iron oxide, and they can also contain other minor oxides and reduced amounts of metals and alloys. By using adequate processes, nearly all the ferrous and non-ferrous metallic components of these residues can be removed.

The disposal of these bottom ashes in landfill has been the most frequently treatment for these residues. This solution is not only expensive but also constitutes a serious waste management problem for being severely damaging for the environment. Thus, it becomes necessary to find out solutions regarding the utilization of these residues.

The bottom ashes resulting from the incineration of municipal solid wastes have had a very limited number of practical applications. These applications include the use as filler material for excavations, base material for road pavement and reinforcement material for asphalt and concrete. Up to now, different results on the utilization of bottom ashes resulting from the incineration of municipal solid wastes have been patented:
- as a reinforcement material for asphalt (US 6190447),
- as a material that mixed with other materials can form light weight aggregates (US 20060162618 and US 20060162619) and aggregates with a cement coating (US 5037286),
- as a material that can be incorporated in a batch for vitrification (US 5041398)
- as a material that combined in a proportion of 80-90% (w/w) with 10-20% (w/w) of fly ashes can be submitted to wet grinding for the preparation of a suspension and processed by slip casting for further production of ceramics (US 2003148879 and WO 03059820).

Fly ashes are the lightest particles that in the combustion chamber of a municipal solid wastes incinerator are drifted by the combustion gas. The production of ceramics from fly ashes is reported in different patents, always with the controlled additions of several components (US 5583079, US 5935885 and US 6342461).

The results from the investigation on the production of ceramics made by sintering the bottom ashes resulting from the incineration of municipal solid wastes are very scarce. The fraction of incineration bottom ashes with a particle size smaller than 8 mm was selected by some authors (S. Bethanis 2002 and C. R. Cheeseman 2003), that investigated the effects of different processing conditions on the microstructure and on some physical properties (density, shrinkage and water absorption) of the ceramics obtained by sintering the ground bottom ashes.

Some research results are related to the vitrification of bottom ashes and to the development of glasses that, by controlled thermal treatment, can be transformed into glass-ceramics (L. Barbieri, 2000). The vitrification involves the melting of the residues, process that requires the utilization of high temperatures and thus being a highly energy consuming process.

Considering what has been reported above, it is evidently desirable that ceramic materials made from bottom ashes resulting from the incineration of municipal solid wastes are produced and that they present either chemical properties or mechanical strength suitable for their utilization as a building material and/or utilitarian ceramics and that, simultaneously, have a low cost. According to the literature (ASM 1991) it is considered that ceramic tiles for wall cladding and pavement must present a flexural strength not lower than 20 MPa and a water absorption value that is in the range 13-18%. From an economical point of view it is also desirable to use exclusively as raw materials the incineration bottom ashes, without any of the additives typically used in the production of conventional ceramics, such as clay, feldspar and silica, which increase the cost of the final ceramic.

### Summary

One of the objectives of the present invention is to describe new ceramic materials that contain 25 to 100% w/w of bottom ash particles, preferably between 80-100% w/w, which result from the incineration of solid wastes (SW), preferably municipal solid wastes (MSW), and other suitable raw materials such as additives, coloring and fluxing agents.

In a preferred embodiment, the used bottom ashes are presented as particles of controlled size.

In another preferred embodiment, the ceramic materials present a water absorption value between 0.5-18%, preferably between 13-18% and a flexural strength higher than 20 MPa. In another preferred embodiment, the ceramic materials contain 80% (w/w) of bottom ash particles, with a particle size < 125 µm and 20% (w/w) feldspar.

In another preferred embodiment, the described ceramic materials can be structural ceramics for the building industry such as floor, roof and wall tiles, bricks, cladding materials, among others.

Another object of the present invention is the production of the new materials described in the present invention according to the following steps:
a) crushing and grinding of the bottom ash, followed preferably by a screening step, and still preferably, the grinding of the bottom ash should result in a powder with a particle size smaller than 125 µm or smaller than 250 µm; and the compaction of the particles can be performed at a pressure between 60 and 145 MPa;
b) compaction of the particles of bottom ash resulting from step a) with or without the addition of other raw materials; the added raw materials are preferably additives, coloring and/or fluxing agents, among others, and the compaction is performed preferably by uniaxial dry pressing or wet pressing;
c) sintering of the compacts, preferably at a temperature between 850 °C and 1200 °C, maintaining the selected temperature during a period up to a maximum of 2 hours.

The referred production process of the ceramic materials can additionally have a final step for decoration, such as painting or glazing, among others.

Another preferred embodiment is the production of the ceramic materials previously described and their preparation according one of the processes previously described.

### Description of the invention

The ceramic materials related to this invention are produced from 25 to 100% of bottom ash resulting from the incineration of municipal solid wastes. The bottom ash is dry crushed and dry ground in order to obtain a particle size smaller than 250 µm. The resulting powder can be sieved to obtain a fraction with a particle size smaller than 125 µm. This fraction is named as fine fraction. The powder fraction with particle size smaller than 250 □m is named as coarse fraction.

The powders from each of these fractions are uniaxially dry pressed, at a pressure between 60 and 145 MPa. The compacts obtained after pressing are heated in an electric furnace up to a temperature between 850 °C and 1200 °C, maintaining the selected temperature up to a maximum time of 2 hours, and then the furnace is switched off.

The so produced ceramics appear as dense ceramic materials because the particles are strongly aggregated. They present a granular texture that is dependent on the particle size of the powder fraction selected for their manufacture, and this granular texture becomes more evident in ceramics made from the coarse fraction.

### Detailed description of the invention

Solid wastes consisting fully of bottom ash resulting from the incineration of municipal solid wastes can be used exclusively in the production of the ceramics related to this invention. The as-received bottom ash was very heterogeneous, having particles with different shape and hardness and different sizes (< 1cm). In order to achieve a satisfactory homogenization, the bottom ash was crushed and than milled in a ball mill (with agate media). The milled bottom ash was screened with a 250 µm steel sieve, the powder fraction with an inferior particle size being selected, while the fraction with a larger size was further submitted to a new grinding process to be fully reduced to a particle size smaller than 250 µm, and then it was mixed together with the previously selected fraction. After this step, in order to obtain representative bottom ash samples that can be further used in the processing of the ceramics, the ground bottom ash with a particle size smaller than 250 µm was sampled by the quarter sectioning method. Some of these samples were then screened using a 125 µm sieve and the selected powder fraction smaller than 125 µm was named as fine fraction, by opposition to the powder fraction firstly selected, with a particle size smaller than 250 µm, that was named as coarse fraction.

The powders from both selected fractions were compacted, with the addition or not of other raw materials, by uniaxial dry pressing, using a hydraulic press and hardened steel molds. By using a compaction pressure between 60 and 145 MPa, green compacts with a mechanical strength suitable for further manipulation were obtained.

The compacts obtained after pressing were submitted to a sintering process in an electric furnace, in a static air atmosphere, using a heating rate of 10 °C min⁻¹ up to a maximum temperature between 850 °C, and 1200 °C, holding the selected temperature up to a maximum of 2 hours; after this time the furnace was switched off and the ceramics were cooled down inside the furnace until room temperature.

The produced ceramics are relatively dense because during the sintering process the particles were strongly aggregated, and they presented a satisfactory mechanical strength to be used as structural ceramics, specifically for pavement and cladding tiles. They showed a granular texture, having an aesthetic appearance similar to granitic rock, and the existence of macroscopic crystalline grains from different mineralogical phases was rather evident. The granular texture exhibited by the produced ceramics depends on the particle size of the bottom ash powder fraction selected for the manufacture, being more evident if the ceramics was produced from the coarse reaction.

### Examples

For an easier understanding of the invention, examples of preferred achievements of the invention are described below, which, however, are not intended to limit the object of this invention.

### Example 1 - Characterization of the ceramic material made from 100% MSW bottom ash

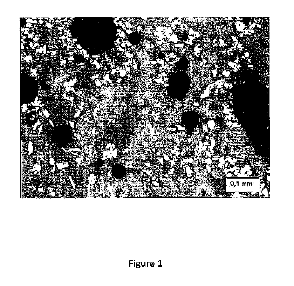

It is presented as an example, one of the ceramic materials prepared with 100% bottom ash powder (less than 125 µm), pressed at 140 MPa and sintered at 1100 °C for 2 hours. Observed by optical microscopy (Figure 1) the produced material appears as a ceramic composed of different mineralogical phases, bonded by a glassy phase, and some residual porosity, at a value of 10-12%, which is essentially constituted by approximately spherical pores. The mineralogical phases, identified by X-ray diffraction, are quartz (SiO₂), wollastonite (CaSiO₃) and diopside (Ca(Mg.Fe.Al) Si₂O₆).

### Description of the Figures

Figure 1 - Microphotograph, obtained by optical microscopy (100x), of a ceramic compact prepared from MSW bottom ash, sintered at 1100 °C for 2h (bottom ash particle size <125 µm).

The physical and mechanical properties (flexural strength and Vickers hardness) of a ceramic produced under such conditions from municipal solid waste bottom ash particles are presented in Table 1.

### Table 1 - Physical and mechanical properties of the ceramic produced from municipal solid waste bottom ash particles with a size <125 µm, by pressing and sintering at 1100 ° C for 2 hours.

**Table 1**

| | |
|---|---|
| Density | 2.4 gcm⁻³ |
| Water absorption | 15 % |
| Coefficient of thermal expansion | 10x10⁻⁶ C⁻¹ |
| Flexural strength | 25 MPa |
| Vickers hardness | 2.1-4.4 GPa |

### Example 2 - Characterization of the ceramic material obtained from a mixture of 80 wt% MSW bottom ash and 20 wt% feldspar.

It is presented as example 2, one of the ceramic materials prepared with 80 wt% bottom ash (fraction less than 125 µm) and 20 wt% feldspar (average particle size less than 300 µm), pressed at 140 MPa and sintered at 1100 ° C for 2 hours. The mineralogical phases identified by X-ray diffraction, are quartz (SiO₂) and wollastonite (CaSiO₃). The physical and mechanical properties (flexural strength and Vickers hardness) of a ceramic produced under such conditions are shown in Table 2.

### Table 2 - Physical and mechanical properties of the ceramic produced from a mixture of bottom ashes resulting of the incineration of municipal solid waste (80% w/w) with particle size <125 µm and 20% w/w feldspar by pressing and sintering at 1100 ° C for 2 hours,

**Table 2**

| | |
|---|---|
| Density | 2.5 gcm⁻³ |
| Water absorption | 0.5 % |
| Coefficient of thermal expansion | 9.6x10-6 ° C⁻¹ |
| Flexural strength | 44±9 MPa |
| Vickers hardness | 2.5-6 GPa |

### References

L. Barbieri, A. Corradi, I. Lancellotti, Bulk and sintered glass-ceramics by recycling municipal incinerator bottom ash, J. Eur. Ceram. Soc., 20 (2000) 1637-1643.
S. Bethanis, C. R. Cheeseman, C. J. Sollars, Properties and microstructure of sintered incinerator bottom ash, Ceram. Int., 28 (2002) 881-886.
C. R. Cheeseman, S. Monteiro da Rocha, C. Sollars, S. Bethanis, A. R. Boccaccini, 7 Ceramic processing of incinerator bottom ash, Waste Manag., 23 (2003) 907-916. ASM International: Engineered Materials Handbook, vol. 4, Ceramics and Glasses. (The Materials Information Society, USA 1991)

## Claims

1. Ceramic materials comprising 25 to 100% w/w of bottom ash particles resulting from the incineration of solid wastes and other appropriate raw materials.

2. Ceramic materials according to claim 1 wherein the used bottom ash is obtained from the incineration of municipal solid wastes.

3. Ceramic materials according to any of the previous claims wherein bottom ash presents a granular texture.

4. Ceramic materials according to any of the previous claims comprising 80% w/w of bottom ash particles, with particle size <125 µm and 20% w /w of feldspar.

5. Ceramic materials according to any of the previous claims wherein the ceramic materials present a water absorption value between 0.5-18%.

6. Ceramic materials, according to any of the previous claims further comprising other raw materials such as additives, coloring or fluxing agents.

7. Ceramic materials according to any of the previous claims, wherein the ceramic materials present a flexural strength higher than 20 MPa.

8. Ceramic materials according to any of the previous claims, wherein the materials are structural ceramics to be used in the construction industry.

9. Manufacturing process of ceramic materials described in the previous claims comprising the following steps:
a) crushing and grinding of the bottom ash;
b) compacting of the bottom ash particles resulting from step a) with or without the addition of other raw materials;
c) sintering of the compacts.

10. A process according to the previous claim, wherein the grinding stage is followed by a screening step.

11. A process according to claims 9 and 10 wherein the bottom ash grinding procedure provides particles with a particle size inferior to 125 µm or 250 µm.

12. A process according to claim 9 wherein particule compaction is carried out by dry uniaxial compaction of the particles.

13. A process according to claim 9 wherein compaction is performed at a pressure between 60 and 145 MPa.

14. A process according to claim 9 wherein the sintering stage of the compacts is carried out at a temperature between 850 °C and 1200 °C, holding the selected temperature up to a maximum of 2 hours.

15. A process according to claims 9 to 14, further comprising a decoration stage, such as painting and glazing.

16. Ceramic materials according to claims 1 to 8 wherein they are obtained by one of the procedures according to any of the previous claims 9 to 15.
